# EUROPEAN PATENT SPECIFICATION

(11) **EP 3 869 097 B1**
(45) Date of publication and mention of the grant of the patent: **09.09.2026**
(21) Application number: 20158953.8
(22) Date of filing: 24.02.2020
(51) Int. Cl.: F21V 23/04, F21S 10/00, H05B 45/20, H05B 47/115, F21S 8/08, F21W 131/103

(54) **DETERMINATION OF STREET CONDITION BY DISTANCE MEASUREMENT**
BESTIMMUNG DES STRASSENZUSTANDS DURCH ABSTANDSMESSUNG
DÉTERMINATION DE L'ÉTAT DE RUES PAR MESURE DE DISTANCE

(43) Date of publication of application: 25.08.2021
(73) Proprietor: Tridonic GmbH & Co KG, 6851 Dornbirn (AT)
(72) Inventor: Kistler, Roger, 6850 Dornbirn (AT); Künzli, Markus, 6850 Dornbirn (AT)
(74) Representative: Beder, Jens

(56) References cited:
- WO-A1-2018/185132
- WO-A1-2019/115599
- JP-A- H0 850 182
- US-A1- 2015 296 593
- US-A1- 2019 261 574
- US-A1- 2019 313 510

## Description

The present invention relates to a luminaire, in particular a street lamp, comprising at least one distance sensor; systems, in particular street lighting systems, comprising such a luminaire; a method for identifying an environmental situation by such a luminaire; and a method for operating such a luminaire.

In the prior art, luminaires, such as street lamps, are well known for providing light to an area, such as a street.

It is an advantage to adapt the lighting by luminaires to environmental situations. Namely, this allows to reduce energy consumption and to increase the safety for persons. For example, in case there has been a snowfall, it is advantageous to increase the light emission by street lamps at places where the street is covered by snow in order for persons walking in this area or vehicles driving in this area to have a better sight of slippery spots on the street due to the snow. At places without snow, the light emission may be kept constant or reduced in order to save energy.

At the moment, a weather forecast is used in order to determine an environmental situation of luminaires, such as street lamps. This is not very accurate and, thus, does not allow the above described advantageous adaption of light emission to environmental situations. Video cameras may be used for monitoring the environmental situation, which causes high costs, or a person may check the environmental situation on site, which is unpractical.

The WO 2018/185132 A1 describes a lighting system having at least one luminaire for illuminating a thoroughfare, with at least one sensor detecting that a fallen object may be at least partially blocking said thoroughfare. A traffic flow monitor monitors traffic flow along said thoroughfare. The light output by the luminaire is controlled to be of a first pattern in accordance with a determination that a fallen object is at least partially blocking said thoroughfare. The light output by the luminaire is controlled to be of a second pattern in accordance with the traffic flow monitor determining that traffic is flowing along said thoroughfare.

The US 2019/313510 A1 describes a method for detecting a dangerous environmental condition within a lighting environment including the steps of: providing a lighting network having a plurality of lighting units each with a light source, at least some of the plurality of lighting units including a range sensor; obtaining, by the range sensors, range information; determining, based at least in part on the obtained range information, a depth of precipitation or accumulation at a first lighting unit; and determining, based on the determined depth, a dangerous environmental condition at the first lighting unit.

Therefore, it is an object of the present invention to provide a luminaire that overcomes the above-described disadvantages, in particular that allows an accurate determination of an environmental situation at the luminaire.

These and other objects, which become apparent upon reading the following description, are solved by the subject-matter of the independent claims. The dependent claims refer to preferred embodiments of the invention.

According to an aspect of the invention, a luminaire, in particular a street lamp, is provided. The luminaire comprises at least one lighting means, such as at least one light emitting diode, at least one distance sensor arranged at a fixed position of the luminaire such that the at least one distance sensor is configured to measure within its sensing region the distance between its position and ground, and a processing unit. The processing unit of the luminaire is configured to identify on the basis of the distance measured by the at least one distance sensor at least one object and, thus, an environmental situation, in particular the street condition, within the sensing region of the at least one distance sensor.

In other words, according to an aspect of the invention, it is proposed to identify at least one object within the sensing region of the at least one distance sensor on the basis of the distance measured by the at least one distance sensor and to identify on the basis of the at least one identified object an environmental situation.

The term "*determine*" may be used as a synonym for the term "*identify*".

Further, the processing unit is configured to identify the environmental situation using at least one additional information, namely time information according to the invention. In particular, the processing unit is configured to identify the at least one object and thus the environmental situation using at least one additional information, in particular time information according to the invention.

Time information according to the invention comprises at least one of the time of day, the season and the month.

For example, in case the distance measured by the at least one distance sensor of the luminaire and/or the detected distance change is indicative of a layer of material on the ground, the information about the month may be used by the processing unit for distinguishing between different kinds of material. For example, in case the time information teaches to the processing unit that it is winter, the processing unit may identify the layer of material to be a layer of snow on the ground. In case the time information teaches to the processing unit that it is autumn without freeze, the processing unit may identify the layer of material to be a layer of leaves on the ground. Thus, in one case, the processing unit identifies the environmental situation to correspond to the presence of snow on the ground and, in the other case, the processing unit identifies the environmental situation to correspond to the presence of leaves on the ground.

The at least one lighting means preferably corresponds to one or more light emitting diodes (LED), such as organic light emitting diodes, inorganic light emitting diodes etc., which may be electrically connected in parallel and/or in series. The at least one lighting means is not limited to one or more light emitting diodes, but may alternatively or additionally comprise or correspond to other lighting means, such as a fluorescence lamps, compact fluorescent lamps etc.

The at least one distance sensor corresponds to one or more radar sensors, one or more light sensors, such as laser sensors, and/or one or more ultrasonic sensors that are configured for a distance measurement. The at least one distance sensor is not limited to such sensors, but may alternatively or additionally correspond to at least one other sensor configured for distance measurement. In case the luminaire comprises a plurality of distance sensors, the distance sensors may be of different type. In particular, the at least one distance sensor is configured to measure distance by measuring time-of-flight. The present invention is not limited to a specific distance measurement method for measuring the distance between the fixed position of the at least one distance sensor and the ground.

Preferably, the luminaire comprises a lighting part comprising the at least one lighting means, wherein the at least one distance sensor is arranged at a fixed position of the luminaire preferably of its lighting part. Moreover, the at least one distance sensor is preferably arranged in one plane with the at least one lighting means.

The term "*detection region*" may be used as a synonym for the term "*sensing region*".

The processing unit preferably comprises or corresponds to a controller, microcontroller, processor, microprocessor, application-specific integrated circuit (ASIC) or any combination of these elements.

The processing unit is preferably a part of the at least one distance sensor.

The terms "*ambient situation*" may be used as a synonym for the term "*environmental situation*".

Since the at least one distance sensor is arranged at a fixed position of the luminaire, the environmental situation within the sensing region of the at least one distance sensor corresponds to the environmental situation of the luminaire respectively to the environmental situation within the vicinity of the luminaire.

The at least one object may correspond to one or more objects due to nature, such as snow, leaves of a tree, branches of a tree etc. Alternatively or additionally, the at least one object may correspond to an object due to a person, such as a garbage can placed by a person and/or a vehicle parking or driving within the sensing region of the at least one distance sensor of the luminaire.

Preferably, the luminaire is a luminaire for outdoor lighting (outdoor luminaire). In particular, the luminaire is a street lamp. In case the luminaire is a street lamp, the processing unit is configured to identify on the basis of the distance measured by the at least one distance sensor at least one object and, thus, the street condition within the sensing region of the at least one distance sensor respectively the street condition within the vicinity of the street lamp.

The luminaire is not limited to being a luminaire for outdoor lighting, in particular a street lamp, but may also be a different type of luminaire, such as a luminaire for indoor lighting (indoor luminaire).

Preferably, in case the distance measured by the at least one distance sensor corresponds to the distance between the fixed position of the distance sensor and the ground, the processing unit is configured to determine on the basis of the measured distance that no object is present within the sensing region of the distance sensor. This corresponds to an original environmental situation. That is, the original or initial environmental situation corresponds to the situation in which no object is present in the sensing region of the at least one distance sensor and, thus, the distance measured by the at least one distance sensor corresponds to the distance between the fixed position of the at least one distance sensor and the ground. The distance between the fixed position of the at least one distance sensor and the ground may also be referred to as original distance and is the maximum distance measurable by the at least one distance sensor at the fixed position of the luminaire.

Preferably, the processing unit is configured to detect a change of the distance measured by the at least one distance sensor and to identify on the basis of the detected distance change the at least one object and, thus, the environmental situation within the sensing region of the at least one distance sensor.

In other words, the processing unit is preferably configured to detect a change from the original distance (first distance) between the position of the at least one distance sensor and the ground to a reduced distance (second distance) between the position of the at least one distance sensor and the at least one object. The distance change is due to the presence of the at least one object in the sensing region of the at least one distance sensor. That is, the distance change, in particular a reduction in distance, is indicative of the at least one object. Thus, the processing unit is preferably configured to identify on the basis of the distance change, in particular on the basis of the distance reduction (from the original distance to the reduced distance), the at least one object. The processing unit is configured to identify on the basis of the identified object(s) the environmental situation of the luminaire.

The processing unit is preferably configured to detect a change of distance measured by the at least one distance sensor and to identify on the basis of the magnitude of the detected distance change the at least one object and, thus, the environmental situation within the sensing region of the at least one distance sensor of the luminaire. Namely, the magnitude of the distance change depends on the at least one object present within the sensing region of the at least one distance sensor and, thus, is indicative of the at least one object.

Further, the processing unit is preferably configured to control the light emission by the at least one lighting means, in particular to change the light intensity, light color and/or color temperature of the light emission, on the basis of the identified environmental situation.

For example, in case the identified environmental situation comprises local dangers, such as snow on the ground causing slippery spots on the ground, the processing unit is preferably configured to change the light intensity, light color and/or color temperature of the light emission by the at least one lighting means of the luminaire in order to indicate to a person passing by the luminaire that in the vicinity of the luminaire slippery spots due to snow are present. In particular, the processing unit may control the at least one lighting means to increase the light intensity of its light emission in order for the person passing by the luminaire to be able to better see the local dangers, such as the slippery spots on the ground. In addition or alternatively the processing unit may control the at least one lighting means to change the color temperature of its light emission to a cold color temperature in order to warn the person of the presence of the local dangers, such as the slippery spots on the ground.

Preferably, the processing unit is configured to respond to the identified environmental situation by controlling light emission by the at least one lighting means in the following ways:
The processing unit may be configured to adapt the emission characteristics of the at least one lighting means on the basis of the identified environmental situation. This allows to avoid a dazzling of a person caused by the identified environmental situation, in case the identified environmental situation is, for example, snow being present in the vicinity of the luminaire which causes reflection of light.

Additionally or alternatively, the processing unit may be configured to increase the light intensity/light level, light color and/or light temperature of the light emission by the at least one lighting means on the basis of the identified environmental situation. This allows to indicate the presence of local dangers caused by the presence of the at least one object, such as slippery spots on the ground due to the object snow, and warn a person about these local dangers. In this case, the identified environmental situation is a presence of snow.

Additionally or alternatively, the processing unit is configured to change the light emission by the at least one lighting means on the basis of the identified environmental situation such that the identified environmental situation, in particular local dangers of the identified environmental situation (e.g. slippery spots on the ground because of snow), are indicated to extern, in particular to a person present in the vicinity of the luminaire. In case the luminaire is a street lamp, street user may be warned of local dangers of the identified environmental situation by this change of light emission causing driving vehicles on the street to reduce their speed.

Preferably, the luminaire comprises at least one further sensor, such as a light sensor for measuring visible light, a motion and/or presence sensor etc., wherein the processing unit is configured to adapt the operating behavior of the at least one further sensor to the identified environmental situation. For example, the processing unit may change the sensitivity and/or operation mode of the at least one further sensor on the basis of the identified environmental situation.

In other words, the luminaire, in particular the processing unit, is preferably configured to locally cause an action respectively response to the identified environmental situation. For example, the processing unit may change the light emission by the at least one lighting means and/or change the operating behavior of the at least one further sensor as a locally performed measure (local measure).

Furthermore, the processing unit is preferably configured to communicate the measured distance, detected distance change, identified object and/or identified environmental situation to extern.

In particular, the processing unit is configured to communicate the measured distance, detected distance change, identified object and/or identified environmental situation to at least one external control unit.

This allows a central/global response by an external control unit to the environmental situation of the luminaire, as described below with respect to the systems.

Preferably, the processing unit is configured to communicate the identified environmental situation or a message indicative of the identified environmental situation to extern, in particular to at least one external control unit.

For example, in case the identified environmental situation is the presence of snow in the vicinity of the luminaire, the processing unit is configured to communicate the presence of snow, in particular the height of snow, to at least one external control unit, such as a computer of the forecast station. This allows an accurate report on the street condition with a high-resolution for weather forecast stations in case the luminaire is a street lamp. Moreover, in case the external control unit is a computer at a city administration office responsible for maintaining streets in a good condition, the use of a street service vehicle for street maintenance may be prioritized dependent on the identified environmental situations, such as snow height, communicated from different luminaires (street lamps) placed at different streets.

Moreover, in case the identified object is a garbage can and, thus, the identified environmental situation is the presence of garbage in the vicinity of the luminaire, the processing unit is configured to communicate the presence of garbage to at least one external control unit, such as a computer of a city administration office. This allows at the city administration office to efficiently plan the route of a garbage collection vehicle along luminaires that have identified garbage cans in their vicinity.

In addition, in case the identified object is the branch of a tree growing into the sensing region of the at least one distance sensor of the luminaire, the processing unit is configured to communicate the presence of such a branch to at least one external control unit, such as a computer of an city administration office. This allows at the city administration office to notify about a tree disturbing the light emission by the luminaire that communicated the message and the disturbance of sensors that may be mounted to the luminaire, or hindering traffic of large vehicles like lorries or busses. Thus, a person may be instructed to cut the tree in order that the tree does not disturb anymore the light emission of the luminaire operation of sensors that may be mounted to the luminaire, and traffic is no linger hindered.

In other words, the luminaire, in particular the processing unit, is preferably configured to cause a central/global action respectively response to the identified environmental situation. For example, the processing unit may communicate a message indicative of the identified environmental situation to at least one central control unit (external control unit). The central control unit may then cause a response to the identified environmental situation, for example instruct a person to deal with the environmental situation (e.g. removing a garbage can or cutting a tree in the vicinity of the luminaire), as a centrally/globally performed measure (central measure).

Preferably, the luminaire comprises a communication interface, such as an interface according to the DALI (Digital Addressable Lighting Interface) industry standard or DALI-2 industry standard. The luminaire, in particular the processing unit, is configured to communicate via the communication interface with extern, in particular with the at least one external control unit.

Preferably, the processing unit is configured to identify on the basis of the measured distance the environmental situation out of a list of different environmental situations, wherein the different environmental situations are linked to different values, in particular threshold values, or ranges for the measured distance. Additionally or alternatively, the processing unit is preferably configured to identify on the basis of the detected distance change the environmental situation out of a list of different environmental situations, wherein the different environmental situations are linked to different values, in particular threshold values, or ranges for the detected distance change. Additionally or alternatively, the processing unit is preferably configured to identify the environmental situation by processing the measured distance using mathematical algorithms.

Such algorithms are in particular self-learning algorithms, such as algorithms used in machine learning. These algorithms are configured to recognize on the basis of training data for different objects present within the sensing region of the at least one distance sensor different distances (reduced distances) between the position of the at least one distance sensor and the respective object and to assign/associate each of these different distances with the respective object. Such training data comprise in particular typical/characteristic distances caused by respective objects.

Examples of different objects comprise
- objects due to nature, such as snow on the ground, leaves of a tree, branches of a tree etc., and
- objects due to a person, such as a garbage can placed by a person within the sensing region of the at least one distance sensor, a vehicle parking or driving within the sensing region of the at least one distance sensor etc.

In particular, the processing unit is configured to identify on the basis of the measured distance the at least one object out of a list of different objects, wherein the different objects are linked to different values, in particular threshold values, or ranges for the measured distance. Additionally or alternatively, the processing unit is preferably configured to identify on the basis of the detected distance change the at least one object out of a list of different objects, wherein the different objects are linked to different values, in particular threshold values, or ranges for the detected distance change. Additionally or alternatively, the processing unit is preferably configured to identify the at least one object by processing the measured distance using mathematical algorithms. As outlined already above, the processing unit may identify based on the identified at least one object the corresponding environmental situation of the luminaire.

For example, snow as an object reduces the original distance between the position of the at least one distance sensor and ground less compared to a garbage can as an object, because a layer of snow on the ground is usually not as high as a garbage can positioned on the ground in the vicinity of the luminaire.

Examples for different environmental situations in the sensing region of the at least one distance sensor of the luminaire and thus in the vicinity of the luminaire may be
- the presence of snow on the ground (identified object is snow),
- the presence of leaves on the ground (identified object is a layer of leaves),
- the presence of one or more branches of a tree (identified objects are one or more tree branches),
- the presence of one or more stationary or moving vehicles (identified objects are one or more vehicles),
- the presence of one or more garbage cans (identified objects are one or more garbage cans) etc.

Preferably, the processing unit is configured to store the list(s) and/or mathematical algorithms in a storage unit. Additionally or alternatively, the processing unit is preferably configured to receive the list(s) and/or mathematical algorithms from extern. Additionally or alternatively, the processing unit is preferably configured to generate the list(s) and/or mathematical algorithms by machine learning.

Such a machine learning may be performed using one or more different training sequences, which allow the processing unit to learn for different objects, which are present within the sensing region of the at least one distance sensor, different distances (reduced distances) between the position of the at least one distance sensor and the respective object, and for each of the different distances the respective object and, thus, environmental situation that caused the respective distance (reduced distance) from the position of the at least one distance sensor towards ground.

For example, for different objects present within the sensing region of the at least one distance sensor, a user records/measures different distances (reduced distances) between the position of the at least one distance sensor and the respective object and assigns/associates each recorded/measured distance to the respective object and, thus, environmental situation, which caused the respective distance. This may then be input as training data for a training sequence to the processing unit. A machine learning software, preferably comprising one or more machine learning algorithms, of the processing unit and, thus, the processing unit is configured to execute the training sequence and, thus, to learn respectively to get to know the different distances (reduced distances) as well as the assignment/association between these different distances and the corresponding objects and, thus, corresponding environmental situations. Therefore, the machine learning software (processing unit performing machine learning) learns to distinguish these different distances (reduced distances) on the basis of training data. The software is then able to identify on the basis of a distance measured by the at least one distance sensor the corresponding object and, thus, corresponding environmental situation, which caused the distance. In particular, the machine learning software and, thus, the processing unit is configured to use the learned distances (reduced distances) for identifying further distances (further reduced distances) and the corresponding objects/environmental situations. That is, the machine learning software is configured to apply the learned knowledge about the different distances (reduced distances) and the corresponding objects/environmental situations on further distances measured by the at least one distance sensor. The identification is performed by classifying the different measured distances.

Preferably, the luminaire comprises a storage unit for storing the list and/or mathematical algorithms. The processing unit is configured to read data from the storage unit and write data to the storage unit. The storage unit may also be called "*data storage unit*". The storage unit may be a part of the processing unit.

Preferably, the at least one distance sensor is configured to perform a punctual measurement and/or a spatial resolved measurement.

In case the at least one distance sensor is configured to perform a spatially resolved measurement, the processing unit is preferably configured to distinguish between at least two objects within the sensing region of the at least one distance sensor of the luminaire which cause identical distances measured by the at least one distance sensor (identical detected distance changes), but that are placed at different spots within the sensing region. For example, in case the luminaire is a street lamp, within the sensing region of the at least one distance sensor of the luminaire a vehicle is parking at the border of the street and a garbage can with same height as the vehicle is placed at the sidewalk next to the street, the at least one distance sensor, configured to perform a spatially resolved measurement, is configured to distinguish between the parking vehicle and the garbage can.

Preferably, the processing unit is configured to identify at least one moving object by evaluating the distance measured by the at least one distance sensor at least two times within a time range.

In other words, the processing unit is preferably configured to evaluate the measurement results of the at least one distance sensor with respect to time in order to distinguish between a stationary object and a moving object, such as a parking vehicle and a moving vehicle.

Further, the processing unit is preferably configured to repeatedly process with a time interval the distance measured by the at least one distance sensor. Additionally or alternatively, the processing unit is preferably configured to process the distance measured by the at least one distance sensor in response to a command received from extern.

In particular the time interval is constant, such that the processing unit is preferably configured to periodically process the distance measured by the at least one distance sensor.

In order to achieve the luminaire according to an aspect of the invention, some or all of the above described optional features may be combined with each other.

According to a further aspect of the invention, a system, in particular a street lighting system, is provided. The system comprises at least one luminaire, in particular at least one street lamp, and at least one central control unit for controlling the at least one luminaire. The at least one luminaire comprises at least one lighting means, such as at least one light emitting diode, and at least one distance sensor arranged at a fixed position of the luminaire such that the at least one distance sensor is configured to measure within its sensing region the distance between its position and ground. The at least one luminaire is configured to communicate the distance measured by the at least one distance sensor to the at least one central control unit. The at least one central control unit is configured to identify on the basis of the distance measured by the at least one distance sensor at least one object and, thus, an environmental situation, in particular the street condition, within the sensing region of the at least one distance sensor of the at least one luminaire.

That is, the at least one luminaire of the system according to a further aspect of the invention differs to the luminaire according to an aspect of the invention in that the at least one luminaire does not comprise a processing unit. The above description of the luminaire according to an aspect of the invention is correspondingly valid for the at least one luminaire of the system according to a further aspect of the invention.

The at least one luminaire is configured to communicate the distance measured by the at least one distance sensor to the at least one central control unit. The at least one central control unit is preferably configured to perform the processes that may be performed by the processing unit of the luminaire according to an aspect of the invention, as described above.

Preferably, the system is a street lighting system, wherein the at least one luminaire is a street lamp and the at least one central control unit is configured to identify on the basis of the distance measured by the at least one distance sensor of the at least one street lamp at least one object and, thus, the street condition at the at least one street lamp respectively the street condition within the sensing region of the at least one distance sensor of the at least one street lamp.

Preferably, the at least one luminaire comprises a communication interface, such as an interface according to the DALI (Digital Addressable Lighting Interface) industry standard or DALI-2 industry standard. The communication interface is configured to communicate with extern, e.g. with the at least one central control unit. In particular, the at least one luminaire is configured to communicate via the communication interface information, such as the measured distance, to the at least one central control unit.

Preferably, the at least one central control unit is configured to control the light emission by the at least one luminaire, in particular to change the light intensity, light color and/or color temperature of the light emission, on the basis of the identified environmental situation.

Preferably, the at least one luminaire comprises at least one further sensor, such as a light sensor for measuring visible light, a motion and/or presence sensor etc., wherein the at least one central control unit is configured to adapt the operating behavior of the at least one further sensor to the identified environmental situation. For example the at least one central control unit may change the sensitivity and/or operation mode of the at least one further sensor on the basis of the identified environmental situation.

The at least one central control unit preferably comprises or corresponds to a controller, microcontroller, processor, microprocessor, application-specific integrated circuit (ASIC) or any combination of these elements.

That is, the at least one central control unit is preferably configured to cause a central/global action respectively response to the identified environmental situation. For example the at least one central control unit may change the light intensity, light color and/or color temperature of the light emission by the at least one luminaire on the basis of the identified environmental situation of the at least one luminaire. Additionally or alternatively, the at least one central control unit may adapt the operating behavior of the at least one further sensor of the at least one luminaire to the identified environmental situation of the at least one luminaire. Additionally or alternatively, the at least one central control unit may cause another response to the identified environmental situation, for example instruct a person to deal with the environmental situation (e.g. removing a garbage can or cutting a tree in the vicinity of the at least one luminaire), as a centrally/globally performed measure (central measure).

The above description with regard to the processing unit of the luminaire according to an aspect of the invention is also valid for the at least one central control unit of the system according to a further aspect of the invention.

Preferably, the at least one central control unit is configured to detect a change of the distance measured by the at least one distance sensor of the at least one luminaire and to identify on the basis of the detected distance change the at least one object and, thus, the environmental situation within the sensing region of the at least one distance sensor of the at least one luminaire.

Preferably, the system comprises at least one further luminaire, in particular at least one further street lamp, and the at least one central control unit is configured to control the light emission by the at least one further luminaire, in particular to change the light intensity, light color and/or color temperature of the light emission, on the basis of the identified environmental situation.

Preferably, the system comprises at least two luminaires, as described above, wherein each of the at least two luminaires is configured to communicate the measured distance to the at least one central control unit. The at least one central control unit is configured to identify an overall environmental situation, in particular an overall street condition, of the system using the measured distances received from the at least two luminaires.

That is, in case the at least two luminaires are street lamps arranged along a street, the at least one central control unit is preferably configured to identify an overall street condition of the street on the basis of the measured distances received from the at least two luminaires.

Preferably, the at least one central control unit is configured to identify for each luminaire of the at least two luminaires on the basis of the measured distance received from the respective luminaire at least one object and, thus, an environmental situation within the sensing region of the at least one distance sensor of the respective luminaire. Then, the at least one central control unit is configured to identify an overall environmental situation, in particular an overall street condition, of the system using the identified environmental situations of the at least two luminaires.

In particular, the at least one central control unit is configured to detect for each luminaire of the at least two luminaires a change of the distance measured by the at least one distance sensor of the respective luminaire and to identify on the basis of the detected distance change the at least one object and, thus, the environmental situation within the sensing region of the at least one distance sensor of the respective luminaire. Then, the at least one central control unit is configured to identify an overall environmental situation, in particular an overall street condition, of the system using the identified environmental situations of the at least two luminaires.

Further, the at least one central control unit is preferably configured to control the light emission of the at least two luminaires, in particular to change the light intensity, light color and/or color temperature of the light emission, on the basis of the identified overall environmental situation of the system.

Furthermore, the at least one central control unit is preferably configured to control the light emission of the at least one further luminaire, in particular to change the light intensity, light color and/or color temperature of the light emission, on the basis of the identified overall environmental situation of the system, in case the system comprises the at least one further luminaire.

In order to achieve the system according to a further aspect of the invention, some or all of the above described optional features may be combined with each other.

According to another aspect of the invention a system, in particular a street lighting system, is provided. The system comprises at least one luminaire according to an aspect of the invention as described above, and at least one central control unit for controlling the at least one luminaire. The at least one luminaire is configured to communicate the measured distance, detected distance change, identified object and/or identified environmental situation to the at least one central control unit. The at least one central control unit is configured to control the light emission by the at least one luminaire, in particular to change the light intensity, light color and/or color temperature of the light emission, using the information, in particular the identified environmental situation, received from the at least one luminaire.

The above description with regard to the luminaire according to an aspect of the invention is also valid for the at least one luminaire of the system according to another aspect of the invention.

Preferably, the system also comprises at least one additional luminaire, which corresponds to a luminaire of the system according to a further aspect of the invention, as described above. In such a case, the description with regard to the at least one luminaire and the at least one central control unit of the system according to a further aspect of the invention is also valid for the at least one additional luminaire and the at least one central control unit of the system according to another aspect of the invention.

Preferably, the at least one central control unit is configured to identify on the basis of the measured distance received from the at least one luminaire the environmental situation, in particular the street condition, within the sensing region of the at least one distance sensor of the at least one luminaire.

Preferably, the system comprises at least one further luminaire, in particular at least one further street lamp, and the at least one central control unit is configured to control the light emission by the at least one further luminaire, in particular to change the light intensity, light color and/or color temperature of the light emission, on the basis of the identified environmental situation (i.e. identified by the at least one central control unit).

In addition or alternatively, the at least one central control unit is preferably configured to control the light emission by the at least one further luminaire, in particular to change the light intensity, light color and/or color temperature of the light emission, using the information, in particular the identified environmental situation (i.e. identified by the processing unit of the at least one luminaire), received from the at least one luminaire.

Furthermore, the system preferably comprises at least two luminaires according to an aspect of the invention, as described above, wherein each of the at least two luminaires is configured to communicate the measured distance, detected distance change, identified object and/or identified environmental situation to the at least one central control unit. The at least one central control unit is configured to identify an overall environmental situation, in particular an overall street condition, of the system using the information received from the at least two luminaires; in particular using the identified environmental situations of the at least two luminaires. The environmental situations of the at least two luminaires may be identified by the processing unit of the respective luminaire and communicated to the at least one central control unit or may be identified by the at least one central control unit.

Alternatively, the system preferably comprises at least one first luminaire corresponding to a luminaire of the system according to a further aspect of the invention, as described above, and at least one second luminaire according to an aspect of the invention, as described above. The at least one first luminaire is configured to communicate the measured distance to the at least one central control unit and the at least one second luminaire is configured to communicate the measured distance, detected distance change, identified object and/or identified environmental situation to the at least one central control unit. The at least one central control unit is configured to identify an overall environmental situation, in particular an overall street condition, of the system using the information received from the at least two luminaires; in particular using the identified environmental situations of the at least two luminaires. The environmental situation of the at least one first luminaire is identified by the at least one central control unit. The environmental situation of the at least one second luminaire may be identified by the processing unit of the at least one second luminaire and communicated to the at least one central control unit or may be identified by the at least one central control unit.

Preferably, the at least one central control unit is configured to control the light emission of the at least two luminaires, in particular to change the light intensity, light color and/or color temperature of the light emission, on the basis of the identified overall environmental situation of the system.

Furthermore, the at least one central control unit is preferably configured to control the light emission of the at least one further luminaire, in particular to change the light intensity, light color and/or color temperature of the light emission, on the basis of the identified overall environmental situation of the system, in case the system comprises the at least one further luminaire.

In order to achieve the system according to another aspect of the invention, some or all of the above described optional features may be combined with each other.

According to a further aspect of the invention a method for identifying an environmental situation by a luminaire according to an aspect of the invention, as described above, is provided. The method comprises the step of identifying at least one object and, thus, an environmental situation, in particular the street condition, within the sensing region of the at least one distance sensor, by the processing unit, on the basis of the distance measured by the at least one distance sensor.

In other words, a method for identifying an environmental situation of a luminaire, in particular of a street lamp, by the luminaire itself is provided, wherein the method comprises the step of
- identifying at least one object and, thus, an environmental situation, in particular the street condition, within the sensing region of the at least one distance sensor of the luminaire, by the processing unit, on the basis of the distance measured by the at least one distance sensor.

The above description with regard to the luminaire according to an aspect of the invention is correspondingly valid for the method according to a further aspect of the invention.

According to another aspect of the invention a method for operating a luminaire according to an aspect of the present invention, as described above, is provided. The method comprises the steps of
- identifying at least one object and, thus, an environmental situation, in particular the street condition, within the sensing region of the at least one distance sensor, by the processing unit, on the basis of the distance measured by the at least one distance sensor, and
- controlling, by the processing unit, the light emission by the at least one lighting means, in particular to change the light intensity, light color and/or color temperature of the light emission, on the basis of the identified environmental situation.

The above description with regard to the luminaire according to an aspect of the invention is correspondingly valid for the method according to another aspect of the invention.

In the following, the invention is described exemplarily with reference to the enclosed Figures, in which
- **Figure 1**: is a schematic view of a luminaire according to an embodiment of the invention with a first example of an environmental situation;
- **Figure 2**: is a schematic view of a luminaire according to an embodiment of the invention with a second example of an environmental situation;
- **Figure 3**: is a schematic view of a luminaire according to an embodiment of the invention with a third example of an environmental situation;
- **Figure 4**: is a block diagram of a system according to an embodiment of the invention.

In the Figures, corresponding elements are marked with identical reference signs.

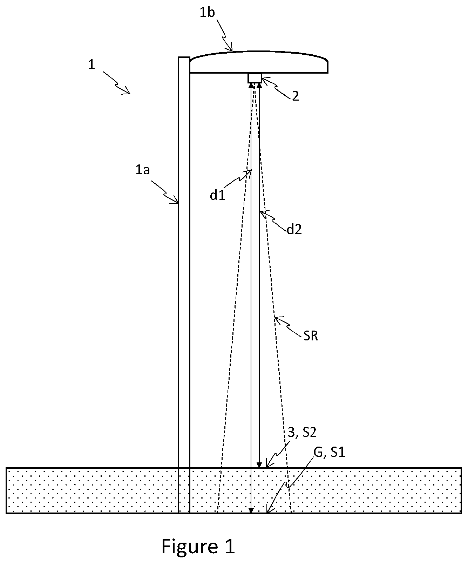

Figure 1 is a schematic view of a luminaire according to an embodiment of the invention with a first example of an environmental situation.

As shown in **Figure 1**, the luminaire 1 is a street lamp with a lighting part 1b and a mounting part 1a for mounting the lighting part 1b over the ground G such that the at least one lighting means (not shown) of the lighting part 1b may illuminate the area below it with light. The luminaire 1 is not limited to being a street lamp and may be a different type of luminaire, such as a different type of luminaire for outdoor lighting (outdoor luminaire) or a luminaire for indoor lighting (indoor luminaire). Moreover, the luminaire is not limited to the type of street lamp shown in Figure 1 and may be implemented as a different type of street lamp. For example, instead of a lamp post (as shown in Figure 1) as a mounting part 1a, the lighting part 1b of the street lamp may also be mounted to a wall, a ceiling, a street sign, a cable arranged across a street etc. Thus, the luminaire 1 shown in Figure 1 is merely by way of example for explaining an embodiment of the invention. Therefore, the invention is not limited to the luminaire type shown in Figure 1.

The above description of the luminaire according to an aspect of the invention is also valid for the luminaire 1 of Figure 1.

The luminaire 1 comprises at least one lighting means (not shown in Figure 1), such as one or more light emitting diodes, a distance sensor 2 and an optional processing unit (not shown in Figure 1). The at least one lighting means are arranged at the lighting part 1b of the luminaire 1, preferably such that at least a part of the lighting means is configured to illuminate in the direction of the ground G the area at the luminaire 1 with light.

According to Figure 1 the luminaire 1 comprises one distance sensor 2. However, as outlined already above, the luminaire 1 may also comprise more than one distance sensor. Therefore, the one distance sensor 2 of Figure 1 is only by way of example for explaining an embodiment of the invention and the invention is not limited to the number of distance sensor shown in Figure 1. The following description with regard to the one distance sensor 2 of Figure 1 is correspondingly valid for other distance sensors in case the luminaire comprises more than one distance sensor.

According to Figure 1, the distance sensor 2 is arranged at a fixed position of the lighting part 1b of the luminaire 1 such that the distance sensor 2 is configured to measure within its sensing region SR the distance d1 between its position and the ground G. The distance sensor 2 may also be arranged at a different fixed position of the luminaire 1, for example at a fixed position of the mounting part 1a, as long as the distance sensor 2 is configured to measure within its sensing region SR a distance between its position and the ground G. That is, the distance sensor 2 is arranged at a fixed position of the luminaire 1 such that it is configured to measure within its sensing region the distance d1 between its position and the ground G.

As indicated in Figure 1, in an original environmental situation/state S1 of the luminaire 1, there is no object within the sensing region SR of the distance sensor 2 of the luminaire 1. That is, in the original environmental situation S1 there is no object near the luminaire 1 respectively at the luminaire 1. Therefore, in case of the original environmental situation S1, the distance d1 measured by the distance sensor 2 corresponds to the true distance between the fixed position of the distance sensor 2 and the ground G. This distance may be referred to as the original distance respectively first distance. In case the distance sensor 2 measures the original distance d1, the processing unit detecting the measured distance d1 knows that there is no object present in the sensing region SR of the distance sensor 2, which corresponds to the original environmental situation S1.

In a different environmental situation S2 of the luminaire 1, shown in Figure 1, there is a layer of snow 3 present on the ground G within the sensing region SR of the distance sensor 2. As a result, the distance d2 measured by the distance sensor 2, in case of the environmental situation S2, corresponds to the distance between the fixed position of the distance sensor 2 and the layer of snow 3. This distance may be referred to as the reduced distance or second distance.

Due to the layer of snow 3, the distance measured by the distance sensor 2 is reduced from the original distance d1 (first distance) to the distance d2 (second distance). That is, the second distance d2, caused by the snow 3 on the ground G, is smaller than the first distance d1 measured by the distance sensor 2 when there is no object within the sensing region SR of the distance sensor 2. Therefore, the distance measured by the distance sensor 2 is indicative of at least one object present in the sensing region SR of the distance sensor 2 and, thus, in the vicinity of the luminaire 1. In particular, the distance change from the original distance d1 to the reduced distance d2 is indicative of the at least one object. Especially, the magnitude of the distance change is indicative of the at least one object.

With regard to the embodiment of Figure 1, the distance change, in particular the magnitude of the distance change, from the original distance d1 to the reduced distance d2 is indicative of the layer of snow 3 constituting an object within the sensing region SR of the distance sensor 2.

The processing unit of the luminaire 1 is configured to identify on the basis of the distance d2 measured by the distance sensor 2 the layer of snow 3 on the ground G (constituting an object within the sensing region SR of the distance sensor 2) and, thus, the environmental situation S2 of snow 3 being present on the ground G.

In particular, the processing unit of the luminaire 1 is configured to detect a change of the distance measured by the distance sensor 2 (from the original distance d1 to the reduced distance d2) and to identify on the basis of the detected distance change the layer of snow 3 as an object in the sensing region SR of the distance sensor 2. The processing unit is then configured to identify on the basis of the identified layer of snow 3 as an object the environmental situation S2 of snow 3 within the sensing region SR of the distance sensor 2.

As a local response/measure to the identified environmental situation S2, the processing unit may change the light intensity, light color and/or color temperature of the light emission by the at least one lighting means of the luminaire 1 in order to warn persons and/or vehicles of the snow 3 and possible slippery spots on the ground G caused by the snow 3. In addition or alternatively, the processing unit may communicate the identified environmental situation S2, i.e. the presence of snow 3 at the luminaire 1, to an external central control unit, as outlined already above. Such a central control unit may be a computer at a city administration office. As a result, the city administration office may use the information about the environmental situation S2 at the luminaire 1 to instruct a street service to take measures against slippery spots caused by snow 3 in the vicinity of the luminaire 1.

In addition or alternatively, the processing unit may also adapt the operating behavior of at least one further sensor to the identified environmental situation S2, in case the luminaire 1 comprises at least one further sensor.

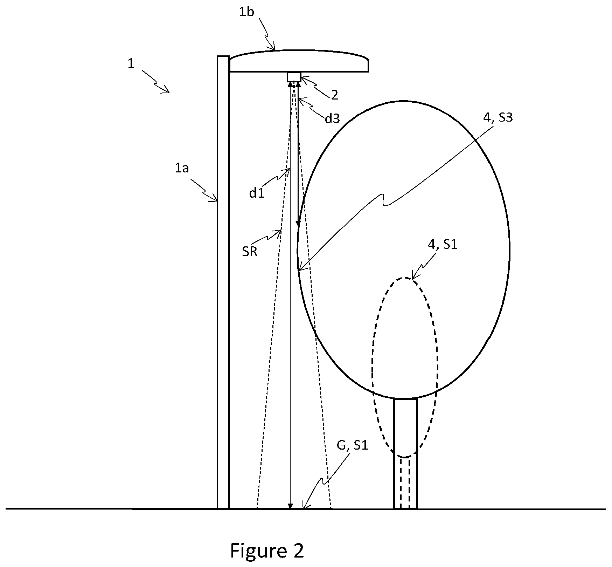

**Figure** 2 is a schematic view of a luminaire according to an embodiment of the invention with a second example of an environmental situation.

The luminaire 1 of Figure 2 corresponds to the luminaire 1 of Figure 1. Therefore, the above description with regard to the luminaire according to an aspect of the invention and the above description with regard to the luminaire 1 of Figure 1 is also valid for the luminaire 1 of Figure 2. Thus, in the following only differences between the Figure 2 and Figure 1 are discussed in order to avoid a repetition.

Figure 2 differs from Figure 1 with regard to the shown environmental situation within the sensing region SR of the distance sensor 2 of the luminaire 1. As shown in Figure 2, there is a tree 4 on the right side of the luminaire 1. In an original environmental situation S1 of the luminaire 1, no part of the tree 4 is within the sensing region SR of the distance sensor 2 of the luminaire 1 and, thus, no object is within the sensing region SR of the distance sensor 2 (for the original environmental situation S1 the tree is shown by dashed lines). That is, in the original environmental situation S1 there is no object in the vicinity of the luminaire 1 respectively at the luminaire 1. Therefore, in case of the original environmental situation S1, the distance d1 (original distance or first distance) measured by the distance sensor 2 corresponds to the distance between the fixed position of the distance sensor 2 and the ground G. In a different environmental situation S3 of the luminaire 1, shown in Figure 2, the tree 4 has grown such that a part of the treetop, in particular branches of the tree 4 (not shown), extend into the sensing region SR of the distance sensor 2 of the luminaire 1 (for the different environmental situation S3 the tree is shown by solid lines). As a result, the distance d3 (reduced distance or second distance) measured by the distance sensor 2, in case of the environmental situation S3, corresponds to the distance between the fixed position of the distance sensor 2 and the treetop of the tree 4.

Due to the treetop of the tree 4 the distance measured by the distance sensor 2 is reduced from the original distance d1 (first distance) to the distance d3 (second distance).

The processing unit of the luminaire 1 is configured to detect a change of the distance measured by the distance sensor 2 (from the original distance d1 to the reduced distance d3) and to identify on the basis of the detected distance change the part of the tree 4 extending into the sensing region SR as an object within the sensing region SR of the distance sensor 2.

As a response/measure to the identified environmental situation S3, the processing unit may communicate the identified environmental situation S3, that is, the presence of a part of the tree 4, at the luminaire 1, to an external central control unit, as outlined already above. Such a central control unit may be a computer at a city administration office. As a result, the city administration office may use the information about the environmental situation S3 at the luminaire 1 to instruct a street service to cut the branches of the tree 4 extending into the vicinity of the luminaire 1 in order to remedy the problem of the branches disturbing a light emission by the luminaire 1.

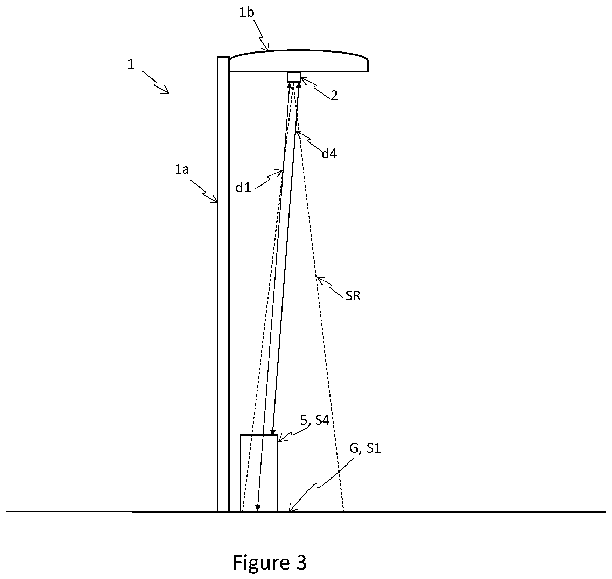

**Figure 3** is a schematic view of a luminaire according to an embodiment of the invention with a third example of an environmental situation.

The luminaire 1 of Figure 3 corresponds to the luminaire 1 of Figure 1 and luminaire 1 of Figure 2. Therefore, the above description with regard to the luminaire according to an aspect of the invention, the above description with regard to the luminaire 1 of Figure 1 and the above description with regard to the luminaire 1 of Figure 2 is also valid for the luminaire 1 of Figure 3. Thus, in the following only differences between the Figure 3 and Figures 1 and 2 are discussed in order to avoid a repetition.

Figure 3 differs from Figures 1 and 2 with regard to the shown environmental situation within the sensing region SR of the distance sensor 2 of the luminaire 1. As shown in Figure 3, in an original environmental situation S1 of the luminaire 1, no object is within the sensing region SR of the distance sensor 2. Therefore, the distance d1 (original distance or first distance) measured by the distance sensor 2, in case of the original environmental situation S1, corresponds to the distance between the fixed position of the distance sensor 2 and the ground G. In a different environmental situation S4 of the luminaire 1, shown in Figure 3, there is a garbage can 5 present on the ground G within the sensing region SR of the distance sensor 2. As a result, the distance d4 (reduced distance or second distance) measured by the distance sensor 2, in case of the environmental situation S4, corresponds to the distance between the fixed position of the distance sensor 2 and the garbage can 5. Due to the garbage can 5, the distance measured by the distance sensor 2 is reduced from the original distance d1 (first distance) to the distance d4 (second distance).

The processing unit of the luminaire 1 is configured to detect a change of the distance measured by the distance sensor 2 (from the original distance d1 to the reduced distance d4) and to identify on the basis of the detected distance change the garbage can 5 as an object in the sensing region SR of the distance sensor 2.

As a response/measure to the identified environmental situation S4, the processing unit may communicate the identified environmental situation S4, that is, the presence of a garbage can 5 at the luminaire 1, to an external central control unit, as outlined already above. Such a central control unit may be a computer at a city administration office. As a result, the city administration office may use the information about the environmental situation S4 to plan the route of a garbage collection vehicle along luminaires that have identified garbage cans in their vicinity.

As described above with respect to the Figures 1, 2 and 3, the processing unit of the luminaire 1 is configured to identify on the basis of the different measured distances d2, d3 and d4 the respective different objects 3, 4, 5 and, thus, the respective different environmental situations S2, S3 and S4. In particular, the processing unit of the luminaire 1 is configured to identify on the basis of the different distance changes, in particular from original distance d1 to distance d2, from original distance d1 to distance d3 and from original distance d1 to distance d4, the respective different objects 3, 4, 5 and, thus, the respective different environmental situations S2, S3 and S4.

As outlined already above, the processing unit may use, for the above described processing of the distance measured by the distance sensor 2 for identifying the environmental situation within the sensing region SR of the distance sensor 2, a list of different environmental situations, wherein the different environmental situations are linked to different values, in particular threshold values, or ranges for the measured distance. Namely, as apparent from Figures 1, 2 and 3 the environmental situations S2, S3 and S4 are caused by different objects 3, 4 and 5 that reduce the original distance d1 measured by the distance sensor 2 to different reduced distances d2, d3 and d4, respectively, wherein the different reduced distances d2, d3 and d4 differ from each other.

The distance d3 measured by the distance sensor 2 of the luminaire 1 of Figure 2 as a result of the tree 4 is smaller than the distance d2 measured by the distance sensor 2 of the luminaire 1 of Figure 1 as a result of the snow 3 and smaller than the distance d4 measured by the distance sensor 2 of the luminaire 1 of Figure 3 as a result of the garbage can 5. The distance d4 measured by the distance sensor 2 of the luminaire 1 of Figure 3 is smaller than the distance d2 measured by the distance sensor 2 of the luminaire 1 of Figure 1. Thus, the distance change caused by the tree 4 of Figure 2 from the original distance d1 to the reduced distance d3 is greater than the distance change caused by the snow 3 of Figure 1 from the original distance d1 to the reduced distance d2 and greater than the distance change caused by the garbage can 5 of Figure 3 from the original distance d1 to the reduced distance d4. The distance change caused by the garbage can 5 of Figure 3 from the original distance d1 to the reduced distance d4 is greater than the distance change caused by the snow 3 of Figure 1 from the original distance d1 to the reduced distance d2.

With respect to the Figures 1, 2 and 3, there may for example be four threshold values which are chosen such that
- the distance d3 caused by the object 4 (tree), in particular by the height of the object 4, in Figure 2 is higher than a first threshold value but lower than a second threshold value of the four threshold values,
- the distance d4 caused by the object 5 (garbage can) in Figure 3 is higher than the second threshold value but lower than a third threshold value of the four threshold values, and
- the distance d2 caused by the object 3 (snow) in Figure 1 is higher than the third threshold value but lower than a fourth threshold value of the four threshold values.
The fourth threshold value is higher than the first, second and third threshold values, the third threshold value is higher than the first and second threshold values and the second threshold value is higher than the first threshold value.

For example, in case the distance sensor 2 would measure a distance that is higher than the second threshold value but lower than the third threshold value the processing unit may identify on the basis of this measured distance the environmental situation S4 of the presence of an garbage can 5 within the sensing region SR of the distance sensor 2.

That is, in the list used by the processing unit
- the environmental situation S3 of Figure 2 may be linked to a first range for the measured distance between the first and second threshold values,
- the environmental situation S4 of Figure 3 may be linked to a second range for the measured distance between the second and third threshold values, and
- the environmental situation S2 of Figure 1 may be linked to a third range for the measured distance between the third and fourth threshold values.

The above description with respect to the threshold values and ranges for the measured distance is only by way of example for describing an embodiment of the invention and, thus, is not limiting the invention. More or less threshold values and/or different threshold values may be used alternatively.

Alternatively or additionally, the processing unit of the luminaire 1 may use, for the above described processing of the distance measured by the distance sensor 2 for identifying the environmental situation within the sensing region SR of the distance sensor 2, a list of different environmental situations, wherein the different environmental situations are linked to different values, in particular threshold values, or ranges for the detected distance change. Additionally or alternatively, the processing unit may identify an object and, thus, an environmental situation by processing the measured distance using mathematical algorithms.

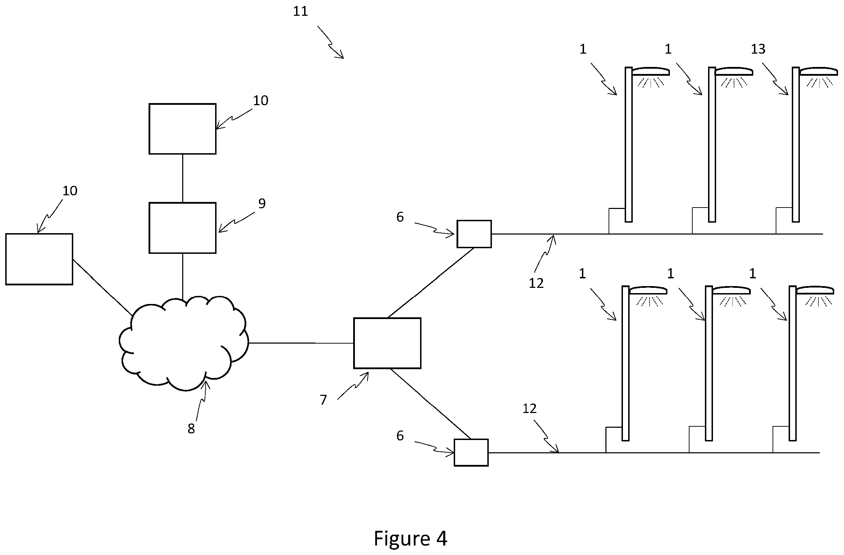

**Figure** 4 is a block diagram of a system according to an embodiment of the invention.

Thus, the above description with regard to a system according to a further aspect of the invention and the description with regard to the system according to another aspect of the invention is also valid for the system 11 of Figure 4.

As shown in Figure 4, the system 11 comprises a plurality of luminaires. Namely, the system 11 comprises five luminaires 1 comprising at least one distance sensor at a fixed positon of the respective luminaire for measuring a distance between its positon and ground and one further luminaire 13 for providing lighting. The system 11 may comprise also a different number of luminaires 1 and 13. That is, the number of luminaires shown in Figure 4 is only by way of example for describing an embodiment of the invention and is not limiting the invention.

At least one of the luminaires 1 corresponds to a luminaire according to an aspect of the invention, in particular to the luminaire according to Figures 1, 2 and 3. Therefore, the description with regard to the luminaire according to an aspect of the invention and the description with regard to the luminaire of Figures 1, 2 and 3 is valid for this at least one luminaire 1. The other luminaires 1 of the system 11 correspond to the luminaire of the system according to a further aspect of the invention and, thus, the description with regard to the luminaire of the system according to a further aspect of the invention is also valid for the other luminaires 1 of the system 11.

On the top of Figure 4, two luminaires 1 and the further luminaire 13 are electrically supplied from a common supply line 12 and, on the bottom of Figure 4, three luminaires 1 are electrically supplied from a common supply line 12. These two groups of luminaires may for example correspond to the luminaires of two different streets.

The luminaires of each group may communicate via the supply lime (power line communication) with a corresponding communication sub-unit 6, such as a concentrator unit. Each communication sub-unit 6 may then communicate data to an optional communication unit 7. The communication unit 7 is configured to communicate via a network 8, such as the internet, data to central control units 10. Alternatively or additionally, at least one of the communication sub-units 6 may communicate directly data via the network 8. In particular, the communication unit 7 and/or at least one of the communication sub-units 6 are configured to communicate data to an optional server 9 of the system 11. At least one central control unit 10 is configured to communicate data via the server 9, in particular to receive data from the server 9.

The communication between the elements of the system 11 may be wireless and/or wired and is not limited to a specific communication method and communication protocol.

The number of central control units 10, optional server 9, optional communication unit 7 and communication sub-units 6 of the system 11 of Figure 4 is only by way of example for explaining an embodiment of the invention and is not limiting the invention. The number of control units 10, optional server 9, optional communication unit 7 and communication sub-units 6 may, thus, be different compared to the number shown in Figure 4.

The following explanation with regard to one central control unit 10 of the system 11 is also valid for the other central control unit(s) 10 of the system 11.

The central control unit 10 may be configured to perform the processes that may be performed by a processing unit of a luminaire according to an aspect of the invention, in particular by the processing unit of the luminaire 1 of Figures 1, 2 and 3.

The central control unit 10 may receive from one or more luminaires 1 an identified environmental situation. On the basis of an identified environmental situation of a first luminaire 1 the central control unit 10 may control the light emission by the first luminaire and/or control the light emission by at least one other luminaire, such as another luminaire 1 or the further luminaire 13.

Additionally or alternatively, the central control unit 10 may receive from one or more luminaires 1, which do not comprise a processing unit for processing (evaluating) the sensors signal but at least one distance sensor, a measured distance. The central control unit 10 is configured to identify on the basis of the measured distance at least one object and, thus, an environmental situation within the sensing region of the at least one distance sensor of the respective luminaire 1. On the basis of the identified environmental situation of the respective luminaire 1 the central control unit 10 may control the light emission by the respective luminaire 1 and/or control the light emission by at least one other luminaire, such as another luminaire 1 or the further luminaire 13.

Additionally or alternatively, the central control unit 10 may be configured to identify on the basis of the measured distances received from at least two luminaires 1 an overall environmental situation of the system 11. Additionally or alternatively, the central control unit 10 may be configured to identify on the basis of the environmental situations of at least two luminaires 1 an overall environmental situation of the system 11.

The central control unit 10 may be configured to control the light emission by at least one luminaire of the system 11 on the basis of the identified overall environmental situation of the system 11.

Controlling the light emission of a luminaire by the central control unit 10 may include changing the light intensity, light color and/or color temperature of the light emission.

For example, in case the two luminaires 1 and the one further luminaire 13 on the top of Figure 4 correspond to street lamps of a street, wherein the two luminaires 1 are placed at different spots of the street, e.g. one at the beginning and one at the end of the street, then the central control unit 10 is configured to identify respectively determine an overall street condition (overall environmental situation) of the street on the basis of the environmental situation of each of the two luminaires 1. The environmental situation of each of the two luminaires 1 may be identified directly by a processing unit of the respective luminaire 1 or by the central control unit 10.

## Claims

1. Luminaire (1), in particular a street lamp, comprising
- at least one lighting means, such as at least one light emitting diode,
- at least one distance sensor (2) arranged at a fixed position of the luminaire such that the at least one distance sensor (2) is configured to measure within its sensing region (SR) the distance (d1) between its position and ground (G), and
- a processing unit, wherein
- the processing unit is configured to identify on the basis of the distance (d2, d3, d4) measured by the at least one distance sensor (2) at least one object (3, 4, 5) and, thus, an environmental situation (S2, S3, S4), in particular the street condition, within the sensing region (SR) of the at least one distance sensor (2), and
- the processing unit is configured to identify the environmental situation using time information
**characterized in that**
the time information comprises at least one of the time of day, the season and the month.

2. Luminaire (1) according to claim 1, wherein
- the processing unit is configured to detect a change of the distance measured by the at least one distance sensor (2) and to identify on the basis of the detected distance change the at least one object (3, 4, 5) and, thus, the environmental situation (S2, S3, S4) within the sensing region (SR) of the at least one distance sensor (2).

3. Luminaire (1) according to any one of the previous claims, wherein
- the processing unit is configured to control the light emission by the at least one lighting means, in particular to change the light intensity, light color and/or color temperature of the light emission, on the basis of the identified environmental situation.

4. Luminaire (1) according to any one of the previous claims, wherein
- the processing unit is configured to communicate the measured distance, detected distance change, identified object and/or identified environmental situation to extern, in particular to at least one external control unit.

5. Luminaire (1) according to any one of the previous claims, wherein
- the processing unit is configured to identify the environmental situation out of a list of different environmental situations, wherein the different environmental situations are linked to different values, in particular threshold values, or ranges for the measured distance;
- the processing unit is configured to identify the environmental situation out of a list of different environmental situations, wherein the different environmental situations are linked to different values, in particular threshold values, or ranges for the detected distance change; and/or
- the processing unit is configured to identify the environmental situation by processing the measured distance using mathematical algorithms.

6. Luminaire (1) according to any one of the previous claims, wherein
- the at least one distance sensor (2) is configured to perform a punctual measurement and/or a spatially resolved measurement.

7. Luminaire (1) according to any one of the previous claims, wherein
- the processing unit is configured to identify at least one moving object by evaluating the distance (d1, d2, d3, d4) measured by the at least one distance sensor (2) at least two times within a time range.

8. Luminaire (1) according to any one of the previous claims, wherein
- the processing unit is configured to repeatedly process with a time interval the distance (d1, d2, d3, d4) measured by the at least one distance sensor (2), and/or
- the processing unit is configured to process the distance (d1, d2, d3, d4) measured by the at least one distance sensor (2) in response to a command received from extern.

9. System (11 ), in particular street lighting system, comprising
- at least one luminaire (1), in particular at least one street lamp, and
- at least one central control unit (10) for controlling the at least one luminaire (1),
wherein
- the at least one luminaire (1) comprises
- at least one lighting means, such as at least one light emitting diode, and
- at least one distance sensor (2) arranged at a fixed position of the luminaire (1) such that the at least one distance sensor (2) is configured to measure within its sensing region (SR) the distance (d1) between its position and ground (G);
- the at least one luminaire (1) is configured to communicate the distance measured by the at least one distance sensor (2) to the at least one central control unit (10);
- the at least one central control unit (10) is configured to
- identify on the basis of the distance (d2, d3, d4) measured by the at least one distance sensor (2) at least one object (3, 4, 5) and, thus, an environmental situation (S2, S3, S4), in particular the street condition, within the sensing region (SR) of the at least one distance sensor (2), and
- the at least one central control unit (10) is configured to identify the environmental situation using time information
**characterized in that**
the time information comprises at least one of the time of day, the season and the month.

10. System (11) according to claim 9, wherein
- the at least one central control unit (10) is configured to control the light emission by the at least one luminaire (1), in particular to change the light intensity, light color and/or color temperature of the light emission, on the basis of the identified environmental situation (S2, S3, S4).

11. System (11), in particular street lighting system, comprising
- at least one luminaire (1) according to any one of the claims 1 to 8, and
- at least one central control unit (10) for controlling the at least one luminaire (1),
wherein
- the at least one luminaire (1) is configured to communicate the measured distance, detected distance change, identified object and/or identified environmental situation to the at least one central control unit (10), and
- the at least one central control unit (10) is configured to control the light emission by the at least one luminaire (1), in particular to change the light intensity, light color and/or color temperature of the light emission, using the information, in particular the identified environmental situation, received from the at least one luminaire (1).

12. System (11) according to claim 11, wherein
- the at least one central control unit (10) is configured to identify on the basis of the measured distance received from the at least one luminaire (1) the environmental situation (S2, S3, S4), in particular the street condition, within the sensing region (SR) of the at least one distance sensor (2) of the at least one luminaire (1).

13. System (11) according to any one of claims 9 to 12, wherein
- the system (11) comprises at least one further luminaire (13), in particular at least one further street lamp, and
- the at least one central control unit (10) is configured to control the light emission by the at least one further luminaire (13) on the basis of the identified environmental situation (S2, S3, S4) and/or using the information, in particular the identified environmental situation, received from the at least one luminaire (1).

14. System (11) according to any one of claims 9 to 13, wherein
- the system (11) comprises
- at least two first luminaires (1) according to the system of claims 9 or 10,
- at least two second luminaires (1) according to any one of the claims 1 to 8, or
- at least one first luminaire (1) according to the system of claims 9 or 10 and at least one second luminaire (1) according to any one of the claims 1 to 8;
- wherein each first luminaire (1) is configured to communicate the measured distance to the at least one central control unit (10),
- each second luminaire (1) is configured to communicate the measured distance, detected distance change, identified object and/or identified environmental situation to the at least one central control unit (10), and
- the at least one central control unit (10) is configured to identify an overall environmental situation, in particular an overall street condition, of the system (11) using the information received from the at least two luminaires (1); in particular using the identified environmental situations of the at least two luminaires (1), and
- preferably the at least one central control unit (10) is configured to control the light emission of the at least two luminaires (1) on the basis of the identified overall environmental situation of the system (11).

15. Method for identifying an environmental situation by a luminaire (1) according to any one of the claims 1 to 8, wherein the method comprises the step of
- identifying at least one object (3, 4, 5) and, thus, an environmental situation (S2, S3, S4), in particular the street condition, within the sensing region (SR) of the at least one distance sensor (2), by the processing unit, on the basis of the distance (d2, d3, d4) measured by the at least one distance sensor (2), wherein
- the processing unit identifies the environmental situation using time information, and the time information comprises at least one of the time of day, the season and the month.

## Patentansprüche

1. Leuchte (1), insbesondere Straßenleuchte, umfassend mindestens ein Leuchtmittel, wie etwa mindestens eine Leuchtdiode, mindestens einen Abstandssensor (2), der an einer festen Position der Leuchte derart angeordnet ist, dass der mindestens eine Abstandssensor (2) dazu eingerichtet ist, innerhalb seines Erfassungsbereichs (SR) den Abstand (d1) zwischen seiner Position und dem Boden (G) zu messen, und eine Verarbeitungseinheit, wobei die Verarbeitungseinheit dazu eingerichtet ist, auf Grundlage des von dem mindestens einen Abstandssensor (2) gemessenen Abstands (d2, d3, d4) mindestens ein Objekt (3, 4, 5) und damit eine Umgebungssituation (S2, S3, S4), insbesondere den Straßenzustand, innerhalb des Erfassungsbereichs (SR) des mindestens einen Abstandssensors (2) zu identifizieren, und die Verarbeitungseinheit dazu eingerichtet ist, die Umgebungssituation unter Verwendung von Zeitinformation zu identifizieren, **dadurch gekennzeichnet, dass** die Zeitinformation die Tageszeit, die Jahreszeit und/oder den Monat umfasst.

2. Leuchte (1) nach Anspruch 1, wobei die Verarbeitungseinheit dazu eingerichtet ist, eine Änderung des von dem mindestens einen Abstandssensor (2) gemessenen Abstands zu erfassen und auf Grundlage der erfassten Abstandsänderung das mindestens eine Objekt (3, 4, 5) und damit die Umgebungssituation (S2, S3, S4) innerhalb des Erfassungsbereichs (SR) des mindestens einen Abstandssensors (2) zu identifizieren.

3. Leuchte (1) nach einem der vorhergehenden Ansprüche, wobei die Verarbeitungseinheit dazu eingerichtet ist, die Lichtemission des mindestens einen Leuchtmittels, insbesondere zum Ändern der Lichtintensität, Lichtfarbe und/oder Farbtemperatur der Lichtemission, auf Grundlage der identifizierten Umgebungssituation zu steuern.

4. Leuchte (1) nach einem der vorhergehenden Ansprüche, wobei die Verarbeitungseinheit dazu eingerichtet ist, den gemessenen Abstand, die erfasste Abstandsänderung, das identifizierte Objekt und/oder die identifizierte Umgebungssituation nach außen zu kommunizieren, insbesondere an mindestens eine externe Steuereinheit.

5. Leuchte (1) nach einem der vorhergehenden Ansprüche, wobei die Verarbeitungseinheit dazu eingerichtet ist, die Umgebungssituation aus einer Liste verschiedener Umgebungssituationen zu identifizieren, wobei die verschiedenen Umgebungssituationen mit unterschiedlichen Werten, insbesondere Schwellenwerten, oder Bereichen für den gemessenen Abstand verknüpft sind; die Verarbeitungseinheit dazu eingerichtet ist, die Umgebungssituation aus einer Liste verschiedener Umgebungssituationen zu identifizieren, wobei die verschiedenen Umgebungssituationen mit unterschiedlichen Werten, insbesondere Schwellenwerten, oder Bereichen für die erfasste Abstandsänderung verknüpft sind; und/oder die Verarbeitungseinheit dazu eingerichtet ist, die Umgebungssituation durch Verarbeiten des gemessenen Abstands unter Verwendung mathematischer Algorithmen zu identifizieren.

6. Leuchte (1) nach einem der vorhergehenden Ansprüche, wobei der mindestens eine Abstandssensor (2) dazu eingerichtet ist, eine punktuelle Messung und/oder eine ortsaufgelöste Messung durchzuführen.

7. Leuchte (1) nach einem der vorhergehenden Ansprüche, wobei die Verarbeitungseinheit dazu eingerichtet ist, mindestens ein bewegtes Objekt zu identifizieren, indem der von dem mindestens einen Abstandssensor (2) gemessene Abstand (d1, d2, d3, d4) mindestens zweimal innerhalb eines Zeitbereichs ausgewertet wird.

8. Leuchte (1) nach einem der vorhergehenden Ansprüche, wobei die Verarbeitungseinheit dazu eingerichtet ist, den von dem mindestens einen Abstandssensor (2) gemessenen Abstand (d1, d2, d3, d4) wiederholt mit einem Zeitintervall zu verarbeiten, und/oder die Verarbeitungseinheit dazu eingerichtet ist, den von dem mindestens einen Abstandssensor (2) gemessenen Abstand (d1, d2, d3, d4) auf einen von außen empfangenen Befehl hin zu verarbeiten.

9. System (11), insbesondere Straßenbeleuchtungssystem, umfassend mindestens eine Leuchte (1), insbesondere mindestens eine Straßenleuchte, und mindestens eine zentrale Steuereinheit (10) zum Steuern der mindestens einen Leuchte (1), wobei die mindestens eine Leuchte (1) umfasst mindestens ein Leuchtmittel, wie etwa mindestens eine Leuchtdiode, und mindestens einen Abstandssensor (2), der an einer festen Position der Leuchte (1) derart angeordnet ist, dass der mindestens eine Abstandssensor (2) dazu eingerichtet ist, innerhalb seines Erfassungsbereichs (SR) den Abstand (d1) zwischen seiner Position und dem Boden (G) zu messen;die mindestens eine Leuchte (1) dazu eingerichtet ist, den von dem mindestens einen Abstandssensor (2) gemessenen Abstand an die mindestens eine zentrale Steuereinheit (10) zu kommunizieren; die mindestens eine zentrale Steuereinheit (10) dazu eingerichtet ist, auf Grundlage des von dem mindestens einen Abstandssensor (2) gemessenen Abstands (d2, d3, d4) mindestens ein Objekt (3, 4, 5) und damit eine Umgebungssituation (S2, S3, S4), insbesondere den Straßenzustand, innerhalb des Erfassungsbereichs (SR) des mindestens einen Abstandssensors (2) zu identifizieren, und die mindestens eine zentrale Steuereinheit (10) dazu eingerichtet ist, die Umgebungssituation unter Verwendung von Zeitinformation zu identifizieren, **dadurch gekennzeichnet, dass** die Zeitinformation die Tageszeit, die Jahreszeit und/oder den Monat umfasst.

10. System (11) nach Anspruch 9, wobei die mindestens eine zentrale Steuereinheit (10) dazu eingerichtet ist, die Lichtemission der mindestens einen Leuchte (1), insbesondere zum Ändern der Lichtintensität, Lichtfarbe und/oder Farbtemperatur der Lichtemission, auf Grundlage der identifizierten Umgebungssituation (S2, S3, S4) zu steuern.

11. System (11), insbesondere Straßenbeleuchtungssystem, umfassend mindestens eine Leuchte (1) nach einem der Ansprüche 1 bis 8, und mindestens eine zentrale Steuereinheit (10) zum Steuern der mindestens einen Leuchte (1), wobei die mindestens eine Leuchte (1) dazu eingerichtet ist, den gemessenen Abstand, die erfasste Abstandsänderung, das identifizierte Objekt und/oder die identifizierte Umgebungssituation an die mindestens eine zentrale Steuereinheit (10) zu kommunizieren, und die mindestens eine zentrale Steuereinheit (10) dazu eingerichtet ist, die Lichtemission der mindestens einen Leuchte (1), insbesondere zum Ändern der Lichtintensität, Lichtfarbe und/oder Farbtemperatur der Lichtemission, unter Verwendung der von der mindestens einen Leuchte (1) empfangenen Information, insbesondere der identifizierten Umgebungssituation, zu steuern.

12. System (11) nach Anspruch 11, wobei die mindestens eine zentrale Steuereinheit (10) dazu eingerichtet ist, auf Grundlage des von der mindestens einen Leuchte (1) empfangenen gemessenen Abstands die Umgebungssituation (S2, S3, S4), insbesondere den Straßenzustand, innerhalb des Erfassungsbereichs (SR) des mindestens einen Abstandssensors (2) der mindestens einen Leuchte (1) zu identifizieren.

13. System (11) nach einem der Ansprüche 9 bis 12, wobei das System (11) mindestens eine weitere Leuchte (13), insbesondere mindestens eine weitere Straßenleuchte, umfasst, und die mindestens eine zentrale Steuereinheit (10) dazu eingerichtet ist, die Lichtemission der mindestens einen weiteren Leuchte (13) auf Grundlage der identifizierten Umgebungssituation (S2, S3, S4) und/oder unter Verwendung der von der mindestens einen Leuchte (1) empfangenen Information, insbesondere der identifizierten Umgebungssituation, zu steuern.

14. System (11) nach einem der Ansprüche 9 bis 13, wobei das System (11) umfasst mindestens zwei erste Leuchten (1) gemäß dem System nach Anspruch 9 oder 10, mindestens zwei zweite Leuchten (1) nach einem der Ansprüche 1 bis 8, oder mindestens eine erste Leuchte (1) gemäß dem System nach Anspruch 9 oder 10 und mindestens eine zweite Leuchte (1) nach einem der Ansprüche 1 bis 8; wobei jede erste Leuchte (1) dazu eingerichtet ist, den gemessenen Abstand an die mindestens eine zentrale Steuereinheit (10) zu kommunizieren, jede zweite Leuchte (1) dazu eingerichtet ist, den gemessenen Abstand, die erfasste Abstandsänderung, das identifizierte Objekt und/oder die identifizierte Umgebungssituation an die mindestens eine zentrale Steuereinheit (10) zu kommunizieren, und die mindestens eine zentrale Steuereinheit (10) dazu eingerichtet ist, eine Gesamt-Umgebungssituation, insbesondere einen Gesamt-Straßenzustand, des Systems (11) unter Verwendung der von den mindestens zwei Leuchten (1) empfangenen Information zu identifizieren; insbesondere unter Verwendung der identifizierten Umgebungssituationen der mindestens zwei Leuchten (1), und vorzugsweise die mindestens eine zentrale Steuereinheit (10) dazu eingerichtet ist, die Lichtemission der mindestens zwei Leuchten (1) auf Grundlage der identifizierten Gesamt-Umgebungssituation des Systems (11) zu steuern.

15. Verfahren zum Identifizieren einer Umgebungssituation durch eine Leuchte (1) nach einem der Ansprüche 1 bis 8, wobei das Verfahren den Schritt umfasst des Identifizierens mindestens eines Objekts (3, 4, 5) und damit einer Umgebungssituation (S2, S3, S4), insbesondere des Straßenzustands, innerhalb des Erfassungsbereichs (SR) des mindestens einen Abstandssensors (2) durch die Verarbeitungseinheit auf Grundlage des von dem mindestens einen Abstandssensor (2) gemessenen Abstands (d2, d3, d4), wobei die Verarbeitungseinheit die Umgebungssituation unter Verwendung von Zeitinformation identifiziert, und die Zeitinformation die Tageszeit, die Jahreszeit und/oder den Monat umfasst.

## Revendications

1. Luminaire (1), en particulier lampadaire, comprenantau moins un moyen d'éclairage, tel qu'au moins une diode électroluminescente, au moins un capteur de distance (2) agencé à une position fixe du luminaire de telle sorte que l'au moins un capteur de distance (2) est configuré pour mesurer, à l'intérieur de sa région de détection (SR), la distance (d1) entre sa position et le sol (G), et une unité de traitement, dans lequel l'unité de traitement est configurée pour identifier, sur la base de la distance (d2, d3, d4) mesurée par l'au moins un capteur de distance (2), au moins un objet (3, 4, 5) et, ainsi, une situation environnementale (S2, S3, S4), en particulier l'état de la route, à l'intérieur de la région de détection (SR) de l'au moins un capteur de distance (2), et l'unité de traitement est configurée pour identifier la situation environnementale en utilisant une information temporelle, **caractérisé en ce que** l'information temporelle comprend l'heure de la journée, la saison et/ou le mois.

2. Luminaire (1) selon la revendication 1, dans lequel l'unité de traitement est configurée pour détecter une variation de la distance mesurée par l'au moins un capteur de distance (2) et pour identifier, sur la base de la variation de distance détectée, l'au moins un objet (3, 4, 5) et, ainsi, la situation environnementale (S2, S3, S4) à l'intérieur de la région de détection (SR) de l'au moins un capteur de distance (2).

3. Luminaire (1) selon l'une quelconque des revendications précédentes, dans lequel l'unité de traitement est configurée pour commander l'émission lumineuse de l'au moins un moyen d'éclairage, en particulier pour modifier l'intensité lumineuse, la couleur de lumière et/ou la température de couleur de l'émission lumineuse, sur la base de la situation environnementale identifiée.

4. Luminaire (1) selon l'une quelconque des revendications précédentes, dans lequel l'unité de traitement est configurée pour communiquer vers l'extérieur la distance mesurée, la variation de distance détectée, l'objet identifié et/ou la situation environnementale identifiée, en particulier à au moins une unité de commande externe.

5. Luminaire (1) selon l'une quelconque des revendications précédentes, dans lequel l'unité de traitement est configurée pour identifier la situation environnementale à partir d'une liste de différentes situations environnementales, les différentes situations environnementales étant liées à différentes valeurs, en particulier des valeurs seuils, ou à des plages pour la distance mesurée; l'unité de traitement est configurée pour identifier la situation environnementale à partir d'une liste de différentes situations environnementales, les différentes situations environnementales étant liées à différentes valeurs, en particulier des valeurs seuils, ou à des plages pour la variation de distance détectée; et/ou l'unité de traitement est configurée pour identifier la situation environnementale en traitant la distance mesurée au moyen d'algorithmes mathématiques.

6. Luminaire (1) selon l'une quelconque des revendications précédentes, dans lequel l'au moins un capteur de distance (2) est configuré pour effectuer une mesure ponctuelle et/ou une mesure à résolution spatiale.

7. Luminaire (1) selon l'une quelconque des revendications précédentes, dans lequel l'unité de traitement est configurée pour identifier au moins un objet mobile en évaluant la distance (d1, d2, d3, d4) mesurée par l'au moins un capteur de distance (2) au moins deux fois dans une plage temporelle.

8. Luminaire (1) selon l'une quelconque des revendications précédentes, dans lequel l'unité de traitement est configurée pour traiter de façon répétée, avec un intervalle de temps, la distance (d1, d2, d3, d4) mesurée par l'au moins un capteur de distance (2), et/ou l'unité de traitement est configurée pour traiter la distance (d1, d2, d3, d4) mesurée par l'au moins un capteur de distance (2) en réponse à une commande reçue depuis l'extérieur.

9. Système (11), en particulier système d'éclairage public, comprenant au moins un luminaire (1), en particulier au moins un lampadaire, et au moins une unité de commande centrale (10) destinée à commander l'au moins un luminaire (1), dans lequel l'au moins un luminaire (1) comprend au moins un moyen d'éclairage, tel qu'au moins une diode électroluminescente, et au moins un capteur de distance (2) agencé à une position fixe du luminaire (1) de telle sorte que l'au moins un capteur de distance (2) est configuré pour mesurer, à l'intérieur de sa région de détection (SR), la distance (d1) entre sa position et le sol (G); l'au moins un luminaire (1) est configuré pour communiquer la distance mesurée par l'au moins un capteur de distance (2) à l'au moins une unité de commande centrale (10); l'au moins une unité de commande centrale (10) est configurée pour identifier, sur la base de la distance (d2, d3, d4) mesurée par l'au moins un capteur de distance (2), au moins un objet (3, 4, 5) et, ainsi, une situation environnementale (S2, S3, S4), en particulier l'état de la route, à l'intérieur de la région de détection (SR) de l'au moins un capteur de distance (2), et l'au moins une unité de commande centrale (10) est configurée pour identifier la situation environnementale en utilisant une information temporelle, **caractérisé en ce que** l'information temporelle comprend l'heure de la journée, la saison et/ou le mois.

10. Système (11) selon la revendication 9, dans lequel l'au moins une unité de commande centrale (10) est configurée pour commander l'émission lumineuse de l'au moins un luminaire (1), en particulier pour modifier l'intensité lumineuse, la couleur de lumière et/ou la température de couleur de l'émission lumineuse, sur la base de la situation environnementale identifiée (S2, S3, S4).

11. Système (11), en particulier système d'éclairage public, comprenant au moins un luminaire (1) selon l'une quelconque des revendications 1 à 8, et au moins une unité de commande centrale (10) destinée à commander l'au moins un luminaire (1), dans lequel l'au moins un luminaire (1) est configuré pour communiquer la distance mesurée, la variation de distance détectée, l'objet identifié et/ou la situation environnementale identifiée à l'au moins une unité de commande centrale (10), et l'au moins une unité de commande centrale (10) est configurée pour commander l'émission lumineuse de l'au moins un luminaire (1), en particulier pour modifier l'intensité lumineuse, la couleur de lumière et/ou la température de couleur de l'émission lumineuse, en utilisant l'information, en particulier la situation environnementale identifiée, reçue de l'au moins un luminaire (1).

12. Système (11) selon la revendication 11, dans lequel l'au moins une unité de commande centrale (10) est configurée pour identifier, sur la base de la distance mesurée reçue de l'au moins un luminaire (1), la situation environnementale (S2, S3, S4), en particulier l'état de la route, à l'intérieur de la région de détection (SR) de l'au moins un capteur de distance (2) de l'au moins un luminaire (1).

13. Système (11) selon l'une quelconque des revendications 9 à 12, dans lequel le système (11) comprend au moins un luminaire supplémentaire (13), en particulier au moins un lampadaire supplémentaire, et l'au moins une unité de commande centrale (10) est configurée pour commander l'émission lumineuse de l'au moins un luminaire supplémentaire (13) sur la base de la situation environnementale identifiée (S2, S3, S4) et/ou en utilisant l'information, en particulier la situation environnementale identifiée, reçue de l'au moins un luminaire (1).

14. Système (11) selon l'une quelconque des revendications 9 à 13, dans lequel le système (11) comprend au moins deux premiers luminaires (1) selon le système de la revendication 9 ou 10, au moins deux deuxièmes luminaires (1) selon l'une quelconque des revendications 1 à 8, ou au moins un premier luminaire (1) selon le système de la revendication 9 ou 10 et au moins un deuxième luminaire (1) selon l'une quelconque des revendications 1 à 8; dans lequel chaque premier luminaire (1) est configuré pour communiquer la distance mesurée à l'au moins une unité de commande centrale (10),chaque deuxième luminaire (1) est configuré pour communiquer la distance mesurée, la variation de distance détectée, l'objet identifié et/ou la situation environnementale identifiée à l'au moins une unité de commande centrale (10), et l'au moins une unité de commande centrale (10) est configurée pour identifier une situation environnementale globale, en particulier un état global de la route, du système (11) en utilisant l'information reçue des au moins deux luminaires (1); en particulier en utilisant les situations environnementales identifiées des au moins deux luminaires (1), et de préférence l'au moins une unité de commande centrale (10) est configurée pour commander l'émission lumineuse des au moins deux luminaires (1) sur la base de la situation environnementale globale identifiée du système (11).

15. Procédé d'identification d'une situation environnementale par un luminaire (1) selon l'une quelconque des revendications 1 à 8, le procédé comprenant l'étape consistant à identifier au moins un objet (3, 4, 5) et, ainsi, une situation environnementale (S2, S3, S4), en particulier l'état de la route, à l'intérieur de la région de détection (SR) de l'au moins un capteur de distance (2), par l'unité de traitement, sur la base de la distance (d2, d3, d4) mesurée par l'au moins un capteur de distance (2), dans lequel l'unité de traitement identifie la situation environnementale en utilisant une information temporelle, et l'information temporelle comprend l'heure de la journée, la saison et/ou le mois.
